# EUROPEAN PATENT SPECIFICATION

(11) **EP 0 393 733 B1**
(45) Date of publication and mention of the grant of the patent: **20.07.1994**
(21) Application number: 90200556.0
(22) Date of filing: 08.03.1990
(51) Int. Cl.: H02B 13/02, H02B 1/34, H02B 1/18

(54) **Single- or polyphase medium-voltage switching device and distribution installation assembled therewith**
Ein- oder Mehrphasen-Mittelspannungs-Schaltgerät und damit aufgebaute Verteilungsinstallation
Appareil de coupure monophasé ou polyphasé à moyenne tension et installation de distribution assemblée avec lui

(30) Priority: 22.03.1989 NL 8900709
(43) Date of publication of application: 24.10.1990
(73) Proprietor: HOLEC SYSTEMEN EN COMPONENTEN B.V., NL-7555 CS Hengelo (NL)
(72) Inventor: Tan, Tjoan Sioe Rutger, NL-7558 WN Hengelo (NL)
(74) Representative: de Bruijn, Leendert C.

(56) References cited:
- AT-B- 217 547
- DD-A- 113 829
- US-A- 2 362 798

## Description

The invention relates to a single- or polyphase medium-voltage switching device comprising a metal housing in which one or more switches provided with an actuating mechanism are accommodated, solid insulation being used for insulating and suspending the switches from the metal housing, said housing being constructed from an essentially rectangular metal container having side walls, a bottom wall and uprights fitted near the corner points of the bottom wall, in which container the actuating mechanism of the switching device is accommodated, the housing being closed by means of metal plates attached to the uprights and the container being closed by means of a metal top plate.

A switching device of this type, in particular a polyphase medium-voltage switching device, is described by US-A-2,362,798. In this known switching device, the switches or circuit breakers of each phase are, in one embodiment, suspended and insulated from the top wall of the housing. The circuit-breaker operating and controlling means are located in the container positioned beneath the circuit breakers. In another embodiment, the circuit breakers are supported on and insulated from the bottom wall of the housing, the container accommodating the circuit breaker actuating means being positioned above the circuit breakers. The individual circuit breakers are enclosed by a solid insulating material.

In order to be able to use components insulated with a solid insulating casting resin material, such as disclosed in AT-B-217,547, a mechanically rigid housing is required in order to prevent, inter alia, the casting resin from being subjected to undesirable torsion stresses. Such mechanical loadings cause cracks and breakage of the casting resin, as a consequence of which the grade of insulation is reduced and the switching device no longer meets its specifications.

Housings known in practice for accomodating components insulated with casting resin usually comprise a frame provided with a web of connecting rods, partitions etc. in order to achieve the desired mechanical rigidity. Reference is made to the brochure "M.V.-switchgear high-voltage CAPITOLE", by applicant Holec. One of the consequences of these measures is that, in addition to its complexity, the total quantity of material required and, consequently, also the weight of the overall housing structure also increases appreciably, as does the time which is needed to assemble the housing. In general, the reinforcing structure makes a direct coupling of a plurality of housings difficult, if not impossible.

The object of the invention is therefore to provide a single or polyphase medium-voltage switching device having a relatively simple housing structure, such as known from US-A-2,362,798, which is adequate, in particular for accommodating electrical components insulated with casting resin.

According to the invention this achieved by the one or more switches of a particular phase and further components thereof being combined by an encapsulation of solid insulation to form a single structural entity and being suspended from the bottom plate of the container in the space bounded by the uprights.

The invention makes use of the fact that the actuating mechanism of the switching installation, which mechanism comprises, in general, a plurality of levers, locking pawls and the like which act on one another, should be accommodated in a mechanically rigid container in order to guarantee its reliable functioning. In accordance with the inventive idea, said container is now used as the base for mounting the solid-insulated components. As a result of accommodating the switches and connecting rails of a particular phase in a single encapsulation as a structural entity, attachment to the bottom plate of the container is in principle adequate, which container should per se be of a mechanically rigid construction, if only for the purpose of the reliable functioning of the actuating mechanism. A stable and contact-safe housing is obtained by subsequently fitting side, rear, front and top plates and, if desired, a bottom plate.

As a departure from the housings known in practice for, inter alia, components insulated with casting resin, no reinforcing or connecting rods or the like are furthermore necessary in the embodiment according to the invention. It has been found that a housing manufactured in this manner weighs about one third of the weight of the conventional housings. Such a weight saving is advantageous because less difficult requirements are imposed thereby on transportation and lifting devices for transporting and siting such switching devices and also on the foundations needed therefor.

In a further embodiment of the switching device according to the invention wherein said further components comprise one or more high-voltage blow-out fuses and one or more cylindrical holders constructed of solid insulation having an opening for receiving a blow-out fuse, each holder being suspended in the housing from said encapsulation in an inclined position such that its receiving opening is situated opposite the bottom wall of the container and is accessible from one side of the housing, the plate of said side being divided into two halves, the half situated near the container being of detachable construction for fitting or removing a blow-out fuse.

The inclined arrangement of the holders for the blow-out fuses achieves the result that said holders can be suspended as an entity from the encapsulation of the switches and that only half the front plate needs to be removed to fit and remove blow-out fuses, which does not have a disadvantageous effect on the rigidity of the housing.

Medium-voltage switching devices are generally used in electrical distribution networks for connecting a ring conductor to a transformer. To protect the transformer, a switching device provided with blow-out fuses is then generally required. In order to be able to interrupt the ring conductor from both the one side and the other side, two switching devices are used which are provided essentially with the switches alone. As a consequence of the relatively simple housing construction according to the invention, which is uniform in terms of dimensions, two or more such switching devices can be combined in a simple manner to form a medium-voltage distribution installation having a desired mechanical rigidity.

The invention consequently also relates to a medium-voltage distribution installation comprising two or more medium-voltage switching devices as described above, characterized in that the separate switching devices are arranged adjacent to one another, the containers and uprights situated next to one another being mutually coupled and provided at least in pairs with a common top plate. Mutual connection of adjacent containers, combined with the top plate, yields a mechanically very rigid entity. Any saggings in the upright direction of the housing are effectively prevented in yet another embodiment of the invention wherein the adjacently arranged switching devices are provided at least in pairs with a common metal plate attached to the uprights at least at one side.

It will be clear to a person skilled in the art that the uniform housing discussed above offers many application possibilities, in particular for accommodating the components needed in medium-voltage switching and distribution installations, such as switches, fuses, transformers and the like, especially provided with casting resin insulation. The possibility of coupling switching devices being desirable, for example, in connection with the expected extensions of electrical installations.

The invention therefore also relates to a housing for use with a switching device or a medium-voltage distribution installation, comprising at least one essentially rectangular container having side walls and a bottom wall provided with feed-through openings for the actuating mechanism of one or more electrical switching or safety arrangements to be accommodated in the housing, said at least one container being provided with uprights near the corner points of the bottom wall, having metal plates attached to the uprights for sealing off the space bounded thereby beneath the bottom wall of the at least one container and having a top plate which seals off the least one container, characterized by the bottom wall of the at least one container having means for suspending switches and further components, the top plate extending at least over two containers in the case of a plurality of containers arranged adjacently to one another.

The invention is illustrated in more detail below with reference to the Figures shown in the drawing. In these:
Figure 1 diagrammatically shows a section through a typical medium-voltage switching device accommodated in a housing in accordance with the invention,
Figure 2 diagrammatically shows the housing for a medium-voltage switching device in accordance with the invention in perspective with the parts disassembled, and
Figures 3 to 7 inclusively diagrammatically show embodiments of medium-voltage switching devices and medium-voltage distribution installations in accordance with the invention.

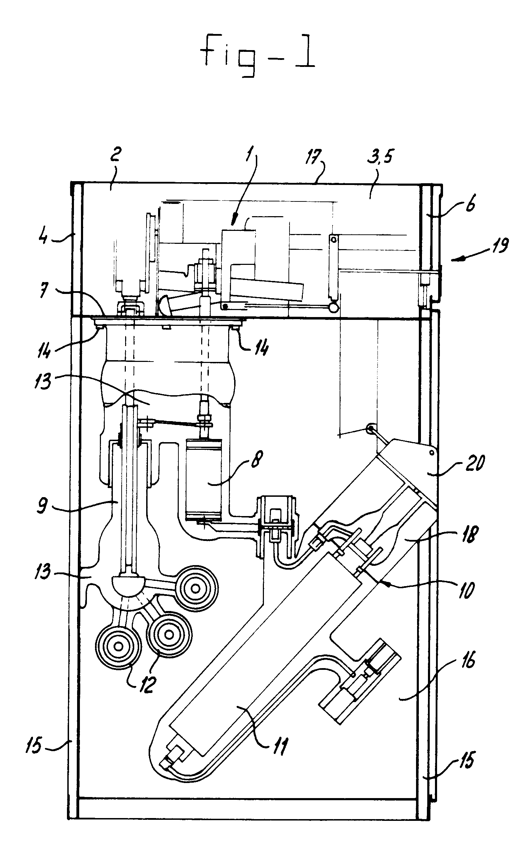

The embodiment, shown diagrammatically in section in Figure 1, of a medium-voltage switching device according to the invention is suitable for 12-24 kV high-voltage installations. The switching installation is provided with an actuating mechanism 1 comprising diverse levers, locking pawls etc., which mechanism is accommodated in a metal container 2 which is provided with side walls 3, 4, 5, 6 and a bottom wall 7. The walls 3-7 of the container 2 have a thickness such that a mechanically rigid construction is obtained, and this is necessary in order to be able to guarantee a reliable operation of the actuating mechanism.

Provided in the bottom wall 7 of the container 2 are feed-through openings which lead to, respectively, a vacuum contact breaker 8, a selection switch 9 and a holder 10 for a blow-out fuse 11. The vacuum contact breaker 8 and the selection switch 9, together with the rail system 12 coupled thereto, are surrounded by a casting resin encapsulation 13 as a structural entity which is suspended with the aid of bolts 14 from the bottom wall 7 of the container.

The holder 10 for a blow-out fuse 11 can optionally be present and coupled to the vacuum contact breaker 8, and is consequently provided with its own casting resin encapsulation.

The container 2 is provided at its corners with uprights 15 such as L, H, U sections, tubes or the like. Although the uprights 15 permit a certain rotation with respect to the longitudinal axis of the housing, this does not result in any undesirable torsion stresses in the casting resin insulation because, as a consequence of the rigid construction of the container 2, the bottom wall 7 forms a stable supporting surface.

In the switching devices known in practice in which components insulated with casting resin are used, the said components are separately attached to various parts of the housing, and this necessitates the fitting of reinforcing structures in the form of connecting rods or sections which may extend transversely, diagonally etc. through the housing in order to provide the rigidity needed for components insulated with casting resin.

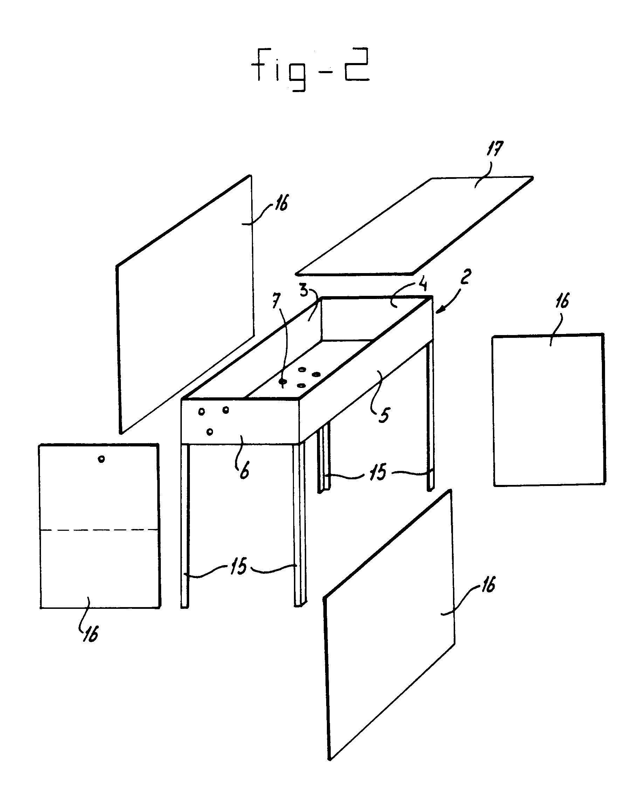

Figure 2 shows the housing according to the invention diagrammatically and in perspective, and from this it can clearly be seen that the container 2 for the switching mechanism extends at the top of the housing over the entire transverse surface thereof. In connection with regulations relating to contact safety, metal plates 16 of various dimensions which are attached to the uprights 15 are provided. A separate top plate 17 is provided for the container 2.

As can be seen from Figure 1, the holder 10 for the blow-out fuse 11 with its receiving opening 18 is arranged at an angle in the direction of the bottom plate 7 of the container 2 and is accessible from the actuation side 19 of the switching device. The advantage of this arrangement of the holder 10 at an angle lies in the fact that, to remove or fit a blow-out fuse in the holder 10, only one section of the plate needs to be removed at the actuation side 19 so that the other parts of the switching device remain protected in a contact-safe manner. The arrangement of the holder 10 at an angle furthermore has the advantage that relatively little space is needed outside the housing of the switching device for manoeuvring with a blow-out fuse 11. This last feature makes this switching device particularly suitable for use in small distribution stations, transformer housings etc. The angle at which the holder 11 is arranged is chosen in a manner such that the replacement of a blow-out fuse 11 can be carried out within the overall height of the housing by means of the gripping device 20 which is provided therefor and which also serves as a cap for connecting a terminal electrode of the blow-out fuse 11 to the other parts of the switching device.

Owing to the absence of reinforcing sections as has already been mentioned above, the housing according to the invention is eminently suitable for a modular system with which two or more switching devices can be combined to form a single distribution installation.

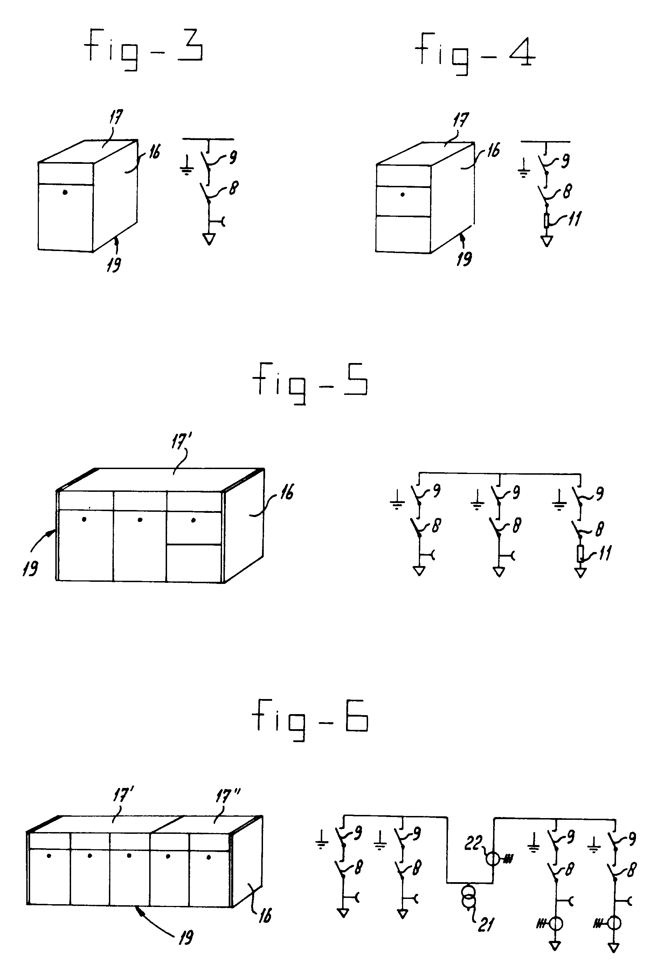

Figures 3 and 4 diagrammatically show the two most important embodiments of medium-voltage switching devices for constructing such a distribution installation. Figure 3 shows a module comprising a combination of a selection switch 9 and a contact breaker 8, to which a blow-out fuse 11 is added in the module according to Figure 4. Both modules have uniform dimensions. Although the associated electrical circuits are drawn in single-phase form, it will be obvious to a person skilled in the art that each module is provided with three circuits as shown in, for example, a three-phase electrical installation.

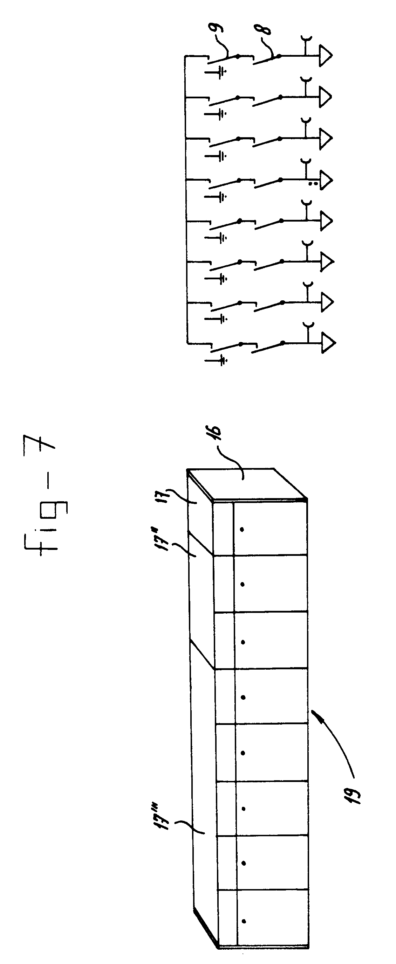

Figure 5 shows a typical construction of a medium-voltage distribution installation for use in a ring mains. The distribution installation is constructed from two modules as shown in Figure 3 and one module as shown in Figure 4 which leads, for example, to a transformer.

As can be seen from Figure 5, the modules arranged next to one another are provided with a common top plate 17'. Using said top plate 17', together with the mutual joining of containers and uprights situated next to one another, produces a stable housing required for components insulated with casting resin, in which housing the bottom surfaces 7 of the separate modules form a torsion-free reference surface. As a result of making use of maintenance-free actuating systems, removal of the top plate 17' is unnecessary so that the torsion-free housing structure is maintained under all circumstances.

In order to prevent a certain sagging of the housing in the plane transverse to the top plate 17', the back wall of the distribution installation, i.e. the wall opposite the actuation side 19 of the switching devices, may also be constructed as a common plate (not shown).

Figure 6 shows diagrammatically another type of distribution installation constructed from modules having a housing according to the invention. The centremost module comprises a so-called test section in which transformers 21, 22 are incorporated for test purposes. The top plates 17', 17'' extend over three or two, respectively, switching devices arranged next to one another. The backwall of the distribution installation may also be constructed of plates extending over two or more devices (not shown).

Figure 7 shows an extended distribution installation constructed from eight modules according to Figure 3. In this case, use is made of a top plate 17''', which extend over five modules, of a top plate 17'' which extends over two modules, and a module having its own top plate 17.

As described above, the invention provides modular medium-voltage devices having a relatively simple housing structure with which distribution installations can be constructed with a mechanically adequate rigid structure permitting the use of components insulated with casting resin. It is obvious to the person skilled in the art that a large number of combinations is possible in which, instead of being arranged side-by-side as shown, the separate modules may also be arranged, for example, with their backs to one another and also provided with top plates extending over a plurality of modules to provide a desired mechanically rigid housing.

Although the invention has been illustrated with reference to components insulated with casting resin, it is, of course, not restricted to this type of solid insulation material.

## Claims

1. Single- or polyphase medium-voltage switching device comprising a metal housing in which one or more switches (8, 9) provided with an actuating mechanism (1) are accommodated, solid insulation (13) being used for insulating and suspending the switches (8, 9) from the metal housing, said housing being constructed from an essentially rectangular metal container (2) having side walls (3-6), a bottom wall (7) and uprights (15) fitted near the corner points of the bottom wall (7), in which container (2) the actuating mechanism (1) of the switching device is accommodated, the housing being closed by means of metal plates (16) attached to the uprights (15) and the container (2) being closed by means of a metal top plate (17), characterized by the one or more switches (8, 9) of a particular phase and further components (11) thereof being combined by an encapsulation (13) of solid insulation to form a single structural entity and being suspended (14) from the bottom plate (7) of the container (2) in the space bounded by the uprights (15).

2. Single- or polyphase medium-voltage switching device according to Claim 1, wherein said further components comprise one or more high-voltage blow-out fuses (11) and one or more cylindrical holders (10) constructed of solid insulation having an opening (18) for receiving a blow-out fuse (11), each holder (10) being suspended in the housing from said encapsulation (13) in an inclined position such that its receiving opening (18) is situated opposite the bottom wall (7) of the container (2) and is accessible from one side (19) of the housing, the plate (16) of said side (19) being divided into two halves, the half situated near the container (2) being of detachable construction for fitting or removing a blow-out fuse (11).

3. Medium-voltage distribution installation comprising two or more medium-voltage switching devices according to Claim 1 or 2, characterized in that the separate switching devices are arranged adjacent to one another, the containers (2) and uprights (15) situated next to one another being mutually coupled and provided at least in pairs with a common top plate (17', 17'', 17''').

4. Medium-voltage distribution installation according to Claim 3, wherein adjacently arranged switching devices are provided at least in pairs with a common metal plate attached to the uprights (15) at least at one side.

5. Housing for use with a switching device according to Claims 1 or 2 or a distribution installation according to Claims 3 or 4, comprising at least one essentially rectangular container (2) having side walls (3-6) and a bottom wall (7) provided with feed-through openings for the actuating mechanism (1) of one or more electrical switching or safety arrangements (8, 9) to be accommodated in the housing, said at least one container (2) being provided with uprights (15) near the corner points of the bottom wall (7), having metal plates (16) attached to the uprights (15) for sealing off the space bounded thereby beneath the bottom wall (7) of the at least one container (2) and having a top plate (17, 17', 17'', 17''') which seals off the least one container (2), characterized by the bottom wall (7) of the at least one container (2) having means for suspending switches (8, 9) and further components (11), the top plate (17', 17'', 17''') extending at least over two containers (2) in the case of plurality of containers (2) arranged adjacently to one another.

## Patentansprüche

1. Ein- oder Mehrphasen-Mittelspannungs-Schaltvorrichtung enthaltend einen Metallgehäuse, in dem ein oder mehrere Schalter (8, 9), die mit einer Betätigungseinrichtung (1) versehen sind, untergebracht sind, eine Massivisolierung (13) zur Isolation und zum Aufhängen der Schalter (8, 9) an dem Metallgehäuses, welches aus einem im wesentlichen rechteckförmigen Metallbehälter (2) mit Seitenwänden (3-6), einer Bodenwand (7) und in der Nähe der Eckpunkte der Bodenwand (7) befestigten Ständern (15) aufgebaut ist, wobei in dem Behälter (2) die Betätigungseinrichtung (1) der Schaltvorrichtung enthalten ist und das Gehäuse mittels an den Ständern (15) befestigten Metallplatten (16) und der Behälter (2) mittels einer oberen Metallplatte (17) geschlossen ist, **dadurch gekennzeichnet**, dass der eine oder mehrere Schalter (8, 9) einer bestimmten Phase und weitere Komponenten (11) davon zur Bildung einer einzigen strukturellen Einheit durch eine Einkapselung (13) aus einer Massivisolierung vereinigt und an der Bodenplatte (7) des Behälters (2) in dem durch die Ständer (15) abgegrenzten Raum aufgehängt (14) ist.

2. Ein- oder Mehrphasen-Mittelspannungs-Schaltvorrichtung nach Anspruch 1, wobei die weiteren Komponenten eine oder mehrere Hochspannungs-Schmelzsicherungen (11) und einen oder mehrere zylindrische Halter (10) umfassen, die aus einer Massivisolierung mit einer Öffnung (18) zur Aufnahme einer Schmelzsicherung (11) aufgebaut sind, wobei jeder Halter (10) im Gehäuse an der Einkapselung (13) in einer geneigten Position so aufgehängt ist, dass seine Aufnahmeöffnung (18) gegenüber der Bodenwand (7) des Behälters (2) positioniert und von einer Seite (19) des Gehäuses zugänglich ist, wobei die Platte (16) dieser Seite (19) in zwei Hälften geteilt ist und die in der Nähe des Behälters (2) liegende Hälfte zum einsetzen oder zum Entfernen einer durchgebrannten Sicherung (11) abnehmbar ist.

3. Mittelspannungs-Verteilerinstallation mit zwei oder mehreren Mittelspannungs-Schaltvorrichtungen nach Anspruch 1 oder 2, **dadurch gekennzeichnet**, dass die getrennten Schaltvorrichtungen benachbart zueinander angeordnet sind, und die nahe beieinanderliegenden Behälter (2) und Ständer (15), miteinander verbunden und zumindest paarweise mit einer gemeinsamen oberen Platte (17', 17'', 17''') versehen sind.

4. Mittelspannungs-Verteilerinstallation nach Anspruch 3, wobei benachbart angeordnete Schalteinrichtungen zumindest paarweise mit einer gemeinsamen Metallplatte versehen sind, die an den Ständern (15) zumindest an einer Seite befestigt ist.

5. Gehäuse zur Verwendung mit einer Schaltvorrichtung nach Anspruch 1 oder 2, oder einer Verteilerinstallation nach Anspruch 3 oder 4, enthaltend mindestens einen im wesentlichen rechteckigen Behälter (2) mit Seitenwänden (3-6) und einer Bodenwand (7), die mit Durchführungsöffnungen für die Betätigungseinrichtung (1) einer oder mehrerer elektrischer Schalter oder Sicherheitsanordnungen (8, 9), die in dem Gehäuse unterzubringen sind, versehen ist, wobei der mindestens eine Behälter (2) mit Ständern (15) in der Nähe der Ecken der Bodenwand (7) versehen ist und Metallplatten (16) aufweist, die an den Ständern (15) zur Abdichtung des durch diese begrenzten Raumes unter der Bodenwand (7) des mindestens einen Behälters (2) befestigt sind, sowie mit einer oberen Platte (17, 17', 17'', 17'''), die mindestens einen Behälter (2) abdichtet, **dadurch gekennzeichnet**, dass die Bodenwand (7) des mindestens einen Behälters (2) Mittel zum Aufhängen der Schalter (8, 9) und weiterer Komponenten (11) aufweist, wobei sich die obere Platte (17, 17'', 17''') mindestens über zwei Behälter (2) erstreckt, wenn eine Mehrzahl von Behältern (2) nebeneinander angeordnet ist.

## Revendications

1. Appareil de coupure monophasé ou polyphasé à moyenne tension comprenant un boîtier métallique dans lequel un ou plusieurs interrupteurs (8, 9) munis d'un mécanisme d'actionnement (1) sont logés, un isolant solide (13) étant utilisé pour isoler les interrupteurs (8, 9) et les suspendre à partir du boîtier métallique, ledit boîtier étant construit à partir d'un conteneur métallique (2) sensiblement rectangulaire ayant des parois latérales (3-6), un fond (7) et des montants (15) fixés près des points d'angle du fond (7), conteneur (2) dans lequel le mécanisme d'actionnement (1) de l'appareil de coupure est logé, le boîtier étant fermé au moyen de plaques métalliques (16) fixées aux montants (15) et le conteneur (2) étant fermé au moyen d'une plaque supérieure métallique (17), **caractérisé** par ledit ou lesdits interrupteurs (8, 9) d'une phase particulière et d'autres composants (11) de l'appareil étant combinés dans un enrobage (13) d'isolant solide pour former une entité de structure unique et étant suspendus (14) à partir de la plaque inférieure (7) du conteneur (2) dans l'espace délimité par les montants (15).

2. Appareil de coupure monophasé ou polyphasé à moyenne tension selon la revendication 1, dans lequel lesdits autres composants comprennent un ou plusieurs fusibles de claquage (11) à haute tension et un ou plusieurs supports cylindriques (10) construits d'un isolant solide ayant une ouverture (18) pour recevoir un fusible de claquage (11), chaque support (10) étant suspendu dans le boîtier à partir dudit enrobage (13) dans une position inclinée, de telle sorte que son ouverture de réception (18) est opposée au fond (7) du conteneur (2) et soit accessible depuis un côté (19) du boîtier, la plaque (16) dudit côté (19) étant divisée en deux moitiés, la moitié située près du conteneur (2) étant de construction amovible pour fixer ou enlever le fusible de claquage (11).

3. Installation de distribution à moyenne tension comprenant deux ou plusieurs appareils de coupure à moyenne tension selon les revendications 1 ou 2, **caractérisée** en ce que les appareils de coupure séparés sont agencés de manière à être adjacents les uns aux autres, les conteneurs (2) et les montants (15) situés près les uns des autres étant couplés mutuellement et pourvus au moins par paires d'une plaque supérieure commune (17, 17'', 17''').

4. Installation de distribution à moyenne tension selon la revendication 3, dans laquelle les appareils de coupure agencés de manière adjacente sont pourvus au moins par paires d'une plaque métallique commune fixée aux montants (15) au moins sur un côté.

5. Boitier à utiliser avec un appareil de coupure selon les revendications 1 ou 2 ou installation de distribution selon les revendications 3 ou 4, comprenant au moins un conteneur sensiblement rectangulaire (2) ayant des parois latérales (3-6) et un fond (7) muni d'ouvertures de passage pour le mécanisme d'actionnement (1) d'un ou de plusieurs dispositifs (8, 9) de coupure électrique ou de protection qui sont logés dans le boîtier, ledit au moins un conteneur (2) étant muni de montants (15) près des points d'angle du fond (7), ayant des plaques métalliques (16) fixées aux montants (15) pour fermer hermétiquement l'espace ainsi délimité audessous du fond (7) de l'au moins un conteneur (2) et ayant une plaque supérieure (17, 17', 17'', 17''') qui ferme hermétiquement l'au moins un conteneur (2) **caractérisé** par le fond (7) de l'au moins un conteneur (2), ayant des moyens pour suspendre des interrupteurs (8, 9) et d'autres composants (11), la plaque supérieure (17', 17'', 17''') s'étendant au moins sur deux conteneurs (2) dans le cas d'une pluralité de conteneurs (2) agencés de manière adjacente les uns aux autres.
